# EUROPÄISCHE PATENTANMELDUNG

(11) **EP 2 468 396 A1**
(43) Veröffentlichungstag der Anmeldung: **27.06.2012**
(21) Anmeldenummer: 11194992.1
(22) Anmeldetag: 21.12.2011
(51) Int. Cl.: B01J 20/18, B01J 20/28, C01B 37/04, C01B 37/08, C01B 39/54, A47L 15/48, A47L 15/00

(54) **Trocknungsvorrichtung enthaltend ein Titano-Alumo-Phosphat**

(30) Priorität: 22.12.2010 DE 102010055729
(71) Anmelder: Süd-Chemie AG, 80333 München (DE)
(72) Erfinder: Sauerbeck, Silke, Dr., 83052 Bruckmühl (DE); Kurzhals, Rolf, Dr., 06188 Landsberg (DE); Tissler, Arno, Dr., 93105 Tegernheim (DE)
(74) Vertreter: Stolmár Scheele & Partner

(57) **Zusammenfassung**

Die vorliegende Erfindung betrifft eine Trocknungsvorrichtung umfassend ein Titano-Alumo-Phosphat mit Wärmemanagement zur effizienteren Trocknung von Gegenständen und Geräten, sowie dessen Herstellung. Weiter betrifft die vorliegende Erfindung ein Trocknungsverfahren zum Erhalt getrockneter Gegenstände und Geräte, sowie ein Verfahren zur Regeneration unter Desorption von Wasser aus wasserhaltigem Titano-Alumo-Phosphat.

## Beschreibung

Die vorliegende Erfindung betrifft eine Trocknungsvorrichtung mit Wärmemanagement umfassend ein Titano-Alumo-Phosphat als Adsorptionsmittel zur energetisch verbesserten Trocknung von Gegenständen und Geräten und dessen Herstellung.

Weiter betrifft die vorliegende Erfindung ein Verfahren zur Befreiung von Gegenständen und Geräten von Restfeuchte, sowie ein Verfahren zur Regeneration eines wasserhaltigen Titano-Alumo-Phosphats.

Mikroporöse Strukturen wie Zeolithe, zu denen auch Alumo-Phosphate (APO), Silico-Alumo-Phosphate (SAPO), Titano-Alumo-Phosphate (TAPO) oder Titano-Silico-Alumo-Phosphate gezählt werden, bilden eine strukturell vielfältige Familie aus komplex aufgebauten Silikat-Mineralien. Sie kommen natürlich vor, werden aber auch synthetisch hergestellt. Die Minerale dieser Gruppe können je nach Strukturtyp bis zu 40 Prozent des Trockengewichtes an Wasser speichern, das beim Erhitzen auf 350 bis 400 °C wieder abgegeben wird. Durch die Regeneration wird Material erhalten, das erneut zur Trocknung eingesetzt werden kann.

Strukturelle Vielfalt und gutes Adsorptionsvermögen zeigen jedoch nicht nur Alumo-Silikat-Zeolithe, sondern auch die Gruppe der Alumo-Phosphate. Strukturen dieser Gruppe werden gemäß der "Structure Commission of the International Zeolite Association" aufgrund ihrer Porengrößen entsprechend den IUPAC-Regeln (International Union of Pure and Applied Chemistry) eingeteilt. Als mikroporöse Verbindungen weisen sie Porengrößen von 0,3 nm bis 0,8 nm auf. Die Kristallstruktur und damit die Größe der gebildeten Poren und Kanäle wird durch Syntheseparameter wie pH, Druck und Temperatur gesteuert. Weitere Faktoren wie die Verwendung von Templaten bei der Synthese, sowie das Al/P/Ti/ (Si)-Verhältnis bestimmen zusätzlich die resultierende Porosität. Sie kristallisieren in mehr als zweihundert verschiedenen Varianten, in mehr als zwei Dutzend verschiedenen Strukturen, die unterschiedliche Poren, Kanäle und Hohlräume aufweisen.

Titano-Alumo-Phosphate sind aufgrund der ausgeglichenen Anzahl an Aluminium- und Phosphoratomen ladungsneutral. Durch isomorphen Austausch von Phosphor durch Silizium entstehen Titano-Silico-Alumo-Phosphate (TAPSO). Durch den Austausch entstehen überzählige negative Ladungen, die durch Einlagerung von zusätzlichen Kationen in das Poren- und Kanalsystem ausgeglichen werden. Der Grad der Phosphor-Silizium-Substitution bestimmt so die Anzahl der zum Ausgleich benötigten Kationen, und somit die maximale Beladung der Verbindung mit positiv geladenen Kationen, z.B. Wasserstoff- oder Metallionen. Durch die Einlagerung der Kationen können die Eigenschaften der Titano-Silico-Alumo-Phosphate (TAPSO) eingestellt und verändert werden.

Die Gerüststrukturen der Titano-Alumo-Phosphate sind aus regelmäßigen, dreidimensionalen Raumnetzwerken mit charakteristischen Poren und Kanälen aufgebaut, die ein-, zwei- oder dreidimensional miteinander verknüpft sein können.

Die vorstehend erwähnten Strukturen entstehen aus eckenverknüpften Tetraederbausteinen (AlO₄, PO₄, TiO₄, ggf. SiO₄), bestehend aus jeweils vierfach von Sauerstoff koordiniertem Aluminium und Phosphor, sowie ggf. Silizium. Die Tetraeder werden als primäre Baueinheiten bezeichnet, deren Verknüpfung zur Bildung von sekundären Baueinheiten führt.

Titano-Alumo-Phosphate, Silico-Alumo-Phosphate und Titano-Silico-Alumo-Phosphate werden typischerweise mittels Hydrothermal-Synthese erhalten, ausgehend von reaktiven Gelen, oder den einzelnen Ti, Al, P, und ggf. Si-Komponenten erhalten, welche in stöchiometrischem Verhältnissen eingesetzt werden. Dabei erfolgt die Herstellung der Titano-Alumo-Silico-Phosphate (TAPSO) analog zur Herstellung der Silico-Alumo-Phosphate (SAPO) (DE 102009034850.6). Unter Zugabe von strukturdirigierenden Templaten, Kristallisationskeimen oder Elementen können diese kristallin erhalten werden (z.B. EP 161488).

Anwendung finden Titano-Alumo-Phosphate vor allem als Katalysatoren in MTO (Methanol-Olefin-Umwandlung) Prozessen, in denen mithilfe spezieller mikroporöser Katalysatoren ausgehend von Methanol ein Gemisch aus Ethen und Propen erhalten werden kann.

Eingesetzt werden Alumo-Phosphate gerne in Dehydrierungsreaktionen (EP 2 022 565 A1) aufgrund ihrer guten wasserziehenden Eigenschaften und ihrer hohen Adsorptionsfähigkeit.

Die Adsorptionsfähigkeit der Titano-Silico-Alumo-Phosphate ist aufgrund der mikroporösen Gerüststruktur besonders gut. Auch Titano-Alumo-Phosphate zeigen gutes Adsorptionsverhalten, da an der großen Oberfläche viele Moleküle adsorbiert werden können. Treffen Wassermoleküle auf die Oberfläche des Titano-Alumo-Phosphats, werden diese adsorbiert. Es erfolgt eine exotherme Anlagerung an der Oberfläche, unter Abgabe der kinetischen Energie der Wassermoleküle sowie ihrer Adsorptionsenergie, die in Form von Adsorptionswärme frei wird. Dabei ist die Adsorption reversibel, wobei die Desorption den umgekehrten Prozess darstellt. Allgemein liegen Adsorption und Desorption in einem konkurrierenden Gleichgewicht vor, das durch Temperatur und Druck gesteuert und beeinflusst werden kann.

Aufgrund ihrer geringen Toxizität und ihrer leichten Handhabung werden Zeolithe bereits im alltäglichen Leben in verschiedenen Bereichen zur Trocknung eingesetzt.

Aus dem Stand der Technik sind Zeolithe aufgrund ihrer wasseranziehenden Eigenschaften bekannt. Sie werden zur Trocknung von Lösungen oder zur Entfeuchtung von geschlossenen Räumen eingesetzt, sowie zum Trocknen von Textilien nach einem Waschvorgang oder von Geschirr in Geschirrspülmaschinen.

Zeolithe unterstützen die Trocknung von Textilien, da üblicherweise deren Trocknung bei niedrigen Temperaturen und geringer Bewegung der feuchten Textilien erfolgt. Zu hohe Temperaturen führen dazu, dass empfindliches Gewebe schrumpfen kann und unbrauchbar wird. Alternativen bietet die statische Durchführung des Trockenvorgangs wodurch jedoch die Trocknungsdauer erhöht wird, da den Textilien das enthaltene Wasser nur oberflächlich entzogen werden kann.

Die Trocknung von Geschirr in Geschirrspülmaschinen soll idealerweise möglichst gleichmäßig erfolgen, da sonst unerwünschte Wasserflecken entstehen können. Insbesondere in der Gastronomie und im Haushalt führt dies zu unbefriedigenden optischen Ergebnissen und erfordert häufig ein Nachbearbeiten von Geschirr, Gläsern und Besteck.

Daher wird versucht, den Vorgang des Trocknens zu optimieren, z.B. durch die Verwendung von besseren Geschirrspülmitteln mit Perleffekt oder einer stärkeren Wasserentfernung aus den Textilien, bereits in der Waschmaschine, was durch höhere Umdrehungszahlen beim Schleudern erreicht werden kann. Diese können jedoch nicht beliebig erhöht werden. Die Erhöhung der Umdrehungszahlen führt zu einer stärkeren Materialbelastung der Waschmaschine, zu starker Geräuschentwicklung sowie dazu, dass Textilien durch zu starkes Schleudern ihre Form als auch ihre Elastizität verlieren.

Aus dem Stand der Technik sind verschiedene Standard-Verfahren zur Trocknung von Gegenständen und Geräten bekannt. Textilien werden meist mittels erwärmter Luftströme unter kontinuierlicher Bewegung getrocknet.

Die WO 2009/010446 offenbart einen Adsorptionstrockner, der unter Verwendung von Unterdruck und einer Wärmevorrichtung zur Trocknung von Textilien eingesetzt wird. Zur Verbesserung der Trocknungswirkung wird zusätzlich ein Zeolith als Adsorptionsmittel eingesetzt. Die zusätzliche Verwendung eines Zeolithen als Adsorptionsmittel zur Feuchtigkeitsentfernung aus den Textilien, ermöglicht eine schnellere Trocknung der Textilien. Dies ist jedoch mit einem höheren Aufwand an Energie verbunden. Zur Regeneration des wasserhaltigen Zeolithen muss dieser erhitzt werden, wodurch zusätzliche Energiekosten anfallen. Die Desorption von Wasser aus der Gerüststruktur des Zeolithen erfolgt anschliessend durch eine längere Behandlung bei hohen Temperaturen von 250 °C bis 400 °C.

Zeolithe können auch in Geschirrspülmaschinen zur besseren Trocknung des Geschirrs eingesetzt werden (DE 20 2208 011 159 U1). Zur Regeneration des wasserhaltigen Zeolithen unter Desorption des adsorbierten Wassers ist eine Behandlung bei hohen Temperaturen (250 °C bis 400 °C) nötig, die zusätzliche Energiekosten verursacht.

Trotz des Vorteils, dass die Trocknungszeiten von Geschirr und Textilien kürzer sind, ist von Nachteil, dass viel Energie pro Trocknungsvorgang aufgewendet werden muss. Obwohl die Trocknungswirkung durch die Verwendung von Zeolithen erhöht wird, entstehen jedoch höhere Stromkosten durch die energieintensive Regeneration des wasserhaltigen Zeolithen. Dies stellt einen unerwünschten Nebeneffekt dar, der insbesondere in Zeiten des Energiesparens nicht erwünscht ist.

Aus dem Stand der Technik sind somit keine energieeffizienten Trocknungsvorrichtungen oder Verfahren bekannt, die eine energie- und kostenreduzierte, sowie effiziente, gleichmäßige und schonende Trocknung von Gegenständen und Geräten ermöglichen. Dabei stellt die energieeffiziente Regeneration des Adsorptionsmittels zur Desorption des adsorbierten Wassers eine besondere Herausforderung dar, deren Lösung aus dem Stand der Technik bislang nicht bekannt ist.

Aufgabe der vorliegenden Erfindung war es daher, eine Trocknungsvorrichtung zur Verfügung zu stellen, die unter Verwendung eines effizienten Trocknungsmittel ein energieeffizientes Trocknungsverfahrens ermöglicht, wobei Energie und Kosten reduziert werden können, sowie eine effiziente, zeitsparende, gleichmäßige und schonende Trocknung von Gegenständen und Geräten ermöglicht.

Erfindungsgemäß wird diese Aufgabe durch eine Trocknungsvorrichtung mit Wärmemanagement gelöst, umfassend einen Adsorptionsbehälter enthaltend ein Titano-Alumo-Phosphat als Adsorptionsmittel, und dessen Herstellung.

Unter "Wärmemanagement" wird erfindungsgemäß ein Ausnutzen von Restwärme unter Energiesparen verstanden. Dies kann beispielsweise nach einem Spülvorgang in einer Spülmaschine erfolgen, oder in einer Trocknungsvorrichtung, wie beispielsweise einem Wäschetrockner. Die Nutzung der Restwärme dient der Regeneration des wasserhaltigen Titano-Alumo-Phosphats, das nach Desorption wieder einsatzfähig wird.

Unter "Wärmemanagement" wird weiter verstanden, dass durch das Ausnutzen von Restwärme die Regeneration des wasserhaltigen Titano-Alumo-Phosphats erleichtert wird. Durch die Restwärme desorbiert bereits ein Teil des adsorbierten Wassers aus dem vorgewärmten wasserhaltigen Titano-Alumo-Phosphat, da nur geringe Temperaturen nötig sind, um dieses zu regenerieren. Das restliche adsorbierte Wasser kann durch geringe Wärmeaufwendung entfernt werden, wodurch die Energiekosten niedrig gehalten werden können.

Weiter wird unter "Wärmemanagement" verstanden, dass erwärmte, Restfeuchte enthaltende Luftströme bereits das wasserhaltige Adsorptionsmittel regenerieren können. Diese Restfeuchte enthaltenden Luftströme, die aus dem Aufnahmeraum, der Gegenstände und Geräte mit Restfeuchte enthält, zur Adsorptionsvorrichtung geleitet werden, erwärmen das Adsorptionsmittel, das die Restfeuchte aus den Luftströmen aufnimmt, und gleichzeitig wieder durch die Wärme regeneriert wird.

Unter dem Begriff "Wärmemanagement" wird erfindungsgemäß auch die Nutzung der Adsorptionswärme eines Adsorptionsmittels verstanden, die durch die Adsorption von Wasser an einer Oberfläche entsteht. Diese Adsorptionswärme wird in Form von Wärme frei und kann dazu genutzt werden, um in thermischem Kontakt dazu stehende Aufnahmeräume, Kammern, Reaktoren, Gegenstände, oder Geräte von Restfeuchte zu befreien. Diese werden durch die Adsorptionswärme vorgewärmt und können so leichter von Restfeuchte befreit werden. Die Adsorptionswärme kann auch dazu genutzt werden um Flüssigkeiten, z.B. Betriebsflüssigkeiten, wie Spülwasser in Geschirrspülmaschinen zu erwärmen. Dies führt vorteilhafterweise dazu, dass die Energiekosten gesenkt werden können.

Der vorliegend verwendete Begriff "Wärmemanagement" umfasst weiter die Nutzung der Adsorptionswärme einer in Adsorption befindlichen Trockenvorrichtung zum Vorwärmen von Betriebsflüssigkeiten. Die Wärmeabgabe erfolgt durch direkten thermischen Kontakt des Adsorptionsbehälters mit dem Betriebsflüssigkeiten enthaltenden Behälter, wodurch ein thermischer Austausch garantiert wird. Dies kann besonders vorteilhaft in Spülmaschinen zur Erwärmung von Spülwasser o.ä. erfolgen.

Ebenso wird unter "Wärmemanagement" die Nutzung der Adsorptionswärme zum Vorwärmen von trockenen Luftströmen oder Trägergasströmen oder anderen Gasen verstanden, z.B. von Luftströmen in Wäschetrocknern. Bei der Adsorption kann der exothermische Adsorptionsvorgang als solcher ausgenutzt werden, damit durch das Ausnutzen der Adsorptionswärme das Trocknen der Gegenstände und Geräte noch leichter und schneller erfolgt, unter Reduzierung von Betriebskosten und Energie.

Desweiteren wird unter "Wärmemanagement" verstanden, dass Titano-Alumo-Phosphate als Wärmespeichermaterialien eingesetzt werden können. Dabei wird frei werdende Wärme z.B. bei einem Spülvorgang in einer Geschirrspülmaschine oder einem Trocknungsvorgang in einem Wäschetrockner vom Adsorptionsmittel aufgenommen, und kann bei Bedarf wieder abgegeben werden, beispielsweise zur Regeneration von wasserhaltigem Adsorptionsmittel, oder zum Vor- oder Erwärmen von Gegenständen und Geräten. Dabei kann eine unnötige Energieverschwendung verhinder werden, indem überschüssige Energie gespeichert und wiederverwendet wird. Diese Anwendung könnte auch in Großindustriellen Anlagen eingesetzt werden, um Abwärme und Restwärme noch weiter auszunutzen.

Die erfindungsgemäße Trocknungsvorrichtung weist gegenüber den Trocknungsgeräten aus dem Stand der Technik den Vorteil auf, dass energie- und kostenreduziert, sowie effizient, zeitsparend, gleichmäßig und schonend, unter Verwendung eines energieeffizienten Trocknungsverfahrens Gegenstände und Geräte von Restfeuchte befreit werden können.

Es wurde überraschenderweise gefunden, dass sich Titano-Alumo-Phosphate für den Einsatz als Adsorptionsmittel für die Trocknung von Gegenständen und Geräten besser als andere Adsorptionsmittel eignen. Aufgrund ihrer guten Adsorptionsfähigkeit von Wasser können Titano-Alumo-Phosphate sehr gut als Adsorptionsmittel zur Entfernung von Restfeuchte aus Gegenständen und Geräten eingesetzt werden. Da die Adsorptionsfähigkeit um ein Vielfaches höher ist als die Adsorptionsfähigkeit von Zeolithen oder Alumo-Phosphaten, kann die Menge an benötigtem Adsorptionsmittel bei gleicher Adsorptionsfähigkeit aufgrund höherer Adsorptionskapazität verringert werden.

Unter Adsorptionskapazität wird das Einlagern von Verbindungen in die mikroporöse Gerüststruktur des Adsorptionsmittels verstanden. Dabei kann in Abhängigkeit der Anlagerungsplätze in der Gerüststruktur des Adsorptionsmittels eine bestimmte Anzahl beispielsweise Wassermoleküle angelagert werden.

Unter "Regenerieren" wird erfindungsgemäß die Rückgewinnung von einsatzfähigem Adsorptionsmittel verstanden, ausgehend von wasserhaltigem Adsorptionsmittel. Das wasserhaltige Titano-Alumo-Phosphat wird durch das Einwirken von Wärme wieder einsatzfähig. Das adsorbierte Wasser wird unter Desorption entfernt, und das Adsorptionsmittel so rückgewonnen.

Überraschenderweise können Titano-Alumo-Phosphate, die in einer erfindungsgemäßen Trocknungsvorrichtung eingesetzt werden, bereits bei einer geringen Desorptionstemperatur von 20 °C bis 150 °C wieder regeneriert werden. Durch ihre geringere Desorptionstemperatur im Vergleich zu Zeolithen, können die Energiekosten die für die Regeneration des Adsorptionsmittels bisher entstanden gesenkt werden.

Von besonderem Vorteil ist, dass das Titano-Alumo-Phosphat bereits bei geringen Temperaturen von 20 °C bis 150 °C, bevorzugt 50 °C bis 100 °C, bevorzugt bis 70 °C regeneriert werden kann. Dadurch können die Energiekosten für die Regeneration des Titano-Alumo-Phosphats sehr gering gehalten werden.

Erfindungsgemäß umfasst das Trocknungsverfahren ein Verfahren zur Regeneration von wasserhaltigem Titano-Alumo-Phosphat in der Trocknungsvorrichtung unter Nutzung von Wärmemanagement, umfassend die Schritte des
a) Regenerierens des wasserhaltigen Titano-Alumo-Phosphats mittels einer Wärmebehandlung,
b) Erhaltens von regeneriertem Titano-Alumo-Phosphat in der Adsorptionsvorrichtung und wasserhaltiger Luft,
c) Abtransportierens der wasserhaltigen Luft mittels Luftströmung.

Nach der Regeneration kann das Titano-Alumo-Phosphat erneut im erfindungsgemäßen Trocknungsverfahren eingesetzt werden.

Überraschenderweise können Titano-Alumo-Phosphate als Wärmemanagement-Materialien zur Adsorption von Wasser eingesetzt werden, da bereits aufgrund von Restwärme in den erfindungsgemäßen Trocknungsvorrichtungen mittels vorgewärmten Luftstroms eine Regeneration erfolgt. Die erfindungsgemäße Trocknungsvorrichtung stellt auch nach dem Trocknungsvorgang ausreichend Wärme zur Verfügung, so dass das wasserhaltige Titano-Alumo-Phosphat noch mittels der warmen Luftströme regeneriert werden kann.

Somit erfolgt eine erleichterte und schnellere Regeneration des wasserhaltigen Titano-Alumo-Phosphats durch die Nutzung der in der Trocknungsvorrichtung vorherrschenden Temperaturen. Erfindungsgemäß wird somit heisse, Restfeuchte enthaltende Luft mittels Luftstrom zum Adsorptionsmittel geführt. Gleichzeitig wird so das Titano-Alumo-Phosphat aufgewärmt und kann durch eine Wärmebehandlung bei relativ niedrigen Temperaturen im Bereich von 50 °C bis 100 °C regeneriert werden. Dies spart Energie, Stromkosten und Zeit, und führt zu einer besonders effizienten Trocknung von Gegenständen und Geräten, da das Adsorptionsmittel bereits nach kurzer Zeit wieder einsatzbereit ist.

Zur Regeneration des wasserhaltigen Titano-Alumo-Phosphats ist eine Wärmebehandlung nötig. Die zur Regeneration benötigten Temperaturen liegen dabei in einem Bereich von 50 °C bis 100 °C, so dass das wasserhaltige Adsorptionsmittel bereits mit feuchter, erwärmter Luft (mit bis zu 63 % Luftfeuchtigkeit) regeneriert werden kann.

Durch den Einsatz des Adsorptionsmittels werden die Gegenstände und Geräte besonders gleichmäßig von Restfeuchte befreit, da die Feuchtigkeit aus dem Aufnahmeraum, der die Gegenstände und Geräte mit Restfeuchte enthält, sofort durch das Adsorptionsmittel aufgenommen wird, und anschließend mittels Luftstrom aus der Trocknungsvorrichtung transportiert wird.

Erfindungsgemäß kann die durch das Adsorptionsmittel getrocknete Luft wieder in den Aufnahmeraum zurück geleitet werden, um dort erneut Feuchtigkeit aufzunehmen. In der Adsorptionsvorrichtung nimmt das Adsorptionsmittel Feuchtigkeit auf und gibt gleichzeitig Adsorptionsenergie in Form von Wärme ab. Somit wird die Luft nicht nur getrocknet, sondern zusätzlich auch noch erwärmt. Dabei ist besonders von Vorteil, dass diese getrocknete, vorgewärmte Luft im Aufnahmeraum mehr Feuchtigkeit aufnehmen kann, da sie noch trockener als die "Ausgangs"-Luft ist.

Bevorzugt wird als Adsorptionsmittel ein Titano-Alumo-Phosphat eingesetzt, das ein regenerierbares Titano-Silico-Alumo-Phosphat (SAPO) ist. Durch die Substitution von Phosphor gegen Silizium verbessert sich die Adsorptionseigenschaft und es kann noch mehr Wasser bei gleicher Menge an Adsorptionsmittel adsorbiert werden. Durch die weitere Einlagerung von Titan in die Gerüststruktur der Silico-Alumo-Phosphate durch Beimengung von TiO₂ zu der gelförmigen Ausgangsmischung kann die Gerüststruktur erhalten bleiben, die Materialeigenschaften werden jedoch verbessert. Typische katalytische Eigenschaften werden durch die Ti-Einlagerung kaum beeinflusst, d.h. durch die mikroporöse Struktur weisen Titano-Alump-Phosphate und Titano-Silico-Alumo-Phosphate sehr gute Adsorptionskapazitäten auf. Weiter wird durch die Einlagerung von TiO₄-Tetraedern in die typische CHA-Struktur jedoch die Wasser-Adsorptionsfähigkeit gegenüber reinen Silico-Alumo-Phosphaten noch erhöht, da die Porösität durch das eingelagerte Titan noch erhöht wird.

Desweiteren weisen Titano-Silico-Alumo-Phosphate eine außergewöhnlich hohe thermische Stabilität auf, sowie hydrothermale Stabilität, wodurch sie bevorzugt bei hohen Temperaturen zur Adsorption von Wasser eingesetzt werden können.

Regenerierbar heißt, dass das wasserhaltige Adsorptionsmittel reversibel das adsorbierte Wasser unter Wärme abgibt. Dadurch wird das Titano-Alumo-Phosphat, oder Silico-Titano-Alumo-Phosphat zurückgewonnen, und kann erneut zur Trocknung eingesetzt werden.

Unter Titano-Alumo-Phosphaten (allgemeine Formel (TiAlPO₄-*n*)) werden im Rahmen der vorliegenden Erfindung mikroporöse Titano-Alumo-Phosphate verstanden.

Unter dem Begriff Titano-Alumo-Phosphat wird im Rahmen der vorliegenden Erfindung, gemäß der Definition der International Mineralogical Association (D.S. Coombs et al., Can. Mineralogist, 35, 1997, 1571) eine kristalline Substanz aus der Gruppe der Aluminiumphosphate mit Raumnetzstruktur verstanden. Vorliegende Titano-Alumo-Phosphate kristallisieren bevorzugt in der CHA-Struktur (Chabazite), und werden nach IUPAC (International Union of Pure and Applied Chemistry) und der "Structure Commission of the International Zeolite Association" aufgrund ihrer Porengröße eingeteilt. Die dreidimensionale Struktur weist ringförmige 8-er Baueinheiten auf, sowie einfach und doppelt gebundene 6-er Ringe, die zu regelmäßigen, dreidimensionalen Raumnetzwerken verbunden sind. Die Raumnetzstruktur weist charakteristische Poren und Kanäle auf, die wieder über die eckenverknüpfte Tetraeder (TiO₄, AlO₄, SiO₄, PO₄) ein-, zwei- oder dreidimensional miteinander verbunden sein können. Die Ti/Al/P/Si-Tetraeder werden als primäre Baueinheiten bezeichnet, deren Verknüpfung zur Bildung von sekundären Baueinheiten führt.

Ausgehend von Titano-Alumo-Phosphaten werden durch isomorphen Austausch von Phosphor mit beispielsweise Silizium sogenannte Silico-Titano-Alumo-Phosphate erhalten, die der allgemeinen Formel (SiₐTi_{b}Al_{c}P_{d})O₂ (wasserfrei) entsprechen.

Besonders geeignet sind Titano-Alumo-Phosphate, die einen teilweisen Ersatz von Phosphor durch Silizium aufweisen, mit einem Ti/Si/ (Al,P)-Verhältnis von 0,01 : 1 bis 0,5 : 1, bevorzugt von 0,02 : 1 bis 0,1 : 1.

In einer Ausführungsform der Erfindung können mikroporöse Titano-Alumo-Phosphate (TAPO) des folgenden Typs eingesetzt werden, TAPO-5, TAPO-8, TAPO-11, TAPO-16, TAPO-17, TAPO-18, TAPO-20, TAPO-31, TAPO-34, TAPO-35, TAPO-36, TAPO-37, TAPO-40, TAPO-41, TAPO-42, TAPO-44, TAPO-47, TAPO-56.

Besonders bevorzugt werden TAPO-5, TAPO-11 oder TAPO-34 eingesetzt.

In einer Ausführungsform der Erfindung können mikroporöse Silico-Titano-Alumo-Phosphate (TAPSO) des folgenden Typs eingesetzt werden, TAPSO-5, TAPSO-8, TAPSO-11, TAPSO-16, TAPSO-17, TAPSO-18, TAPSO-20, TAPSO-31, TAPSO-34, TAPSO-35, TAPSO-36, TAPSO-37, TAPSO-40, TAPSO-41, TAPSO-42, TAPSO-44, TAPSO-47, TAPSO-56.

Besonders bevorzugt werden TAPSO-5, TAPSO-11 oder TAPSO-34 eingesetzt.

Besonders geeignet sind TAPSO-5, TAPSO-11 und TAPSO-34 aufgrund ihrer guten Eigenschaften als Adsorptionsmittel und der geringen Regenerationstemperatur. Erfindungsgemäß eignet sich besonders der Einsatz von mikroporösen Titano-Alumo-Phosphaten mit CHA-Struktur.

In einer Ausführungsform der Erfindung können mikroporöse Silico-Alumo-Phosphate (SAPO) des folgenden Typs eingesetzt werden, wobei auch teilweise Silizium durch Titan ersetzt werden kann unter Erhalt von Ti-SAPOs mit folgender Struktur SAPO-5, SAPO-8, SAPO-11, SAPO-16, SAPO-17, SAPO-18, SAPO-20, SAPO-31, SAPO-34, SAPO-35, SAPO-36, SAPO-37, SAPO-40, SAPO-41, SAPO-42, SAPO-44, SAPO-47, SAPO-56.

Besonders bevorzugt werden SAPO-5, SAPO-11 oder SAPO-34 eingesetzt.

Ein mit Übergangsmetallkationen dotiertes oder metallausgetauschtes Titano-Alumo-Phosphat weist vorzugsweise die folgende Formel auf:

[ (TiₓAl_{y}Si_{z}P_{q}) O₂]^{-a} [M^{b+}]_{a/b},

wobei die verwendeten Symbole und Indices die folgenden Bedeutungen aufweisen: x + y + z + q = 1; 0,010 ≤ x ≤ 0,110; 0, 400 ≤ y ≤ 0,550; 0 ≤ z ≤ 0,090; 0, 350 ≤ q ≤ 0,500; a = y - q (mit der Maßgabe, dass y vorzugsweise größer als q ist); M^{b+} stellt das Kation mit der Ladung b+ dar, wobei b eine ganze Zahl größer oder gleich 1 ist, vorzugsweise 1, 2, 3 oder 4, noch stärker bevorzugt 1, 2 oder 3 und am stärksten bevorzugt 1 oder 2.

Neben Silizium können die erfindungsgemäßen Titano-Alumo-Phosphate auch andere Metalle aufweisen. Ein Teil des Phosphors kann auch durch Titan, und weiteren Metallen wie Eisen, Mangan, Kupfer, Kobalt, Chrom, Zink und / oder Nickel ersetzt werden. Diese werden üblicherweise als SiTAPOs, FeTAPOs, MnTAPOs, CuTAPOs, CoTAPOs, CrTAPOs, ZnTAPOs, CoTAPOs oder NiTAPOs bezeichnet. Besonders geeignet sind die Typen MTAPO-5, MTAPO-8, MTAPO-11, MTAPO-16, MTAPO-17, MTAPO-18, MTAPO-20, MTAPO-31, MTAPO-34, MTAPO-35, MTAPO-36, MTAPO-37, MTAPO-40, MTAPO-41, MTAPO-42, MTAPO-44, MTAPO-47, MTAPO-56 (mit M = Si, Fe, Mn, Cu, Co, Cr, Zn, Ni). Besonders bevorzugt MTAPO-5, MTAPO-11 und MTAPO-34.

Neben Silizium können die erfindungsgemäßen Titano-Alumo-Phosphate noch weitere Metalle aufweisen. Als besonders vorteilhaft erweisen sich der Ionenaustausch mit Eisen, Mangan, Kupfer, Kobalt, Chrom, Zink und Nickel. Besonders geeignet sind TAPSO, FeTAPSO, MnTAPSO, CuTAPSO, CoTAPSO, CrTAPSO, ZnTAPSO, NiTAPSO.

Erfindungsgemäß können die Titano-Alumo-Phosphate auch dotiert vorliegen, bei denen Metall im Gerüst eingebaut ist. Als besonders vorteilhaft erweisen sich Dotierungen mit Titan und/oder weiteren Metallen wie Eisen, Mangan, Kupfer, Kobalt, Chrom, Zink und Nickel. Besonders geeignet sind FeAPSO, APSO, MnAPSO, CuAPSO, CrAPSO, ZnAPSO, CoAPSO und NiAPSO.

Besonders geeignet sind mikroporöse MTAPSOs (M = Ti, Mn, Cu, Cr, Zn, Co, Ni), wie MTAPSO-5, MTAPSO-8, MTAPSO-11, MTAPSO-16, MTAPSO-17, MTAPSO-18, MTAPSO-20, MTAPSO-31, MTAPSO-34, MTAPSO-35, MTAPSO-36, MTAPSO-37, MTAPSO-40, MTAPSO-41, MTAPSO-42, MTAPSO-44, MTAPSO-47, MTAPSO-56.

Besonders bevorzugt werden MTAPSO-5, MTAPSO-11 oder MTAPSO-34 eingesetzt.

Das erfindungsgemäße Titano-Alumo-Phosphat kann weiter mindestens ein weiteres Metall enthalten, ausgewählt aus einer

Gruppe enthaltend Titan, Eisen, Mangan, Kupfer, Kobalt, Chrom, Zink, und Nickel. Durch den Einbau eines oder mehrerer weiterer Metalle verbessern sich noch die Adsorptionseigenschaften der Titano-Alumo-Phosphate. Diese werden üblicherweise als FeTiAPOs, MnTiAPOs, CuTiAPOs, CoTiAPOs, CrTiAPOs, ZnTiAPOs oder NiTiAPOs bezeichnet. Besonders geeignet ist FeTiAPO-5.

Das Titano-Alumo-Phosphat wird erfindungsgemäß als Festbett oder lose Materialschüttung eingesetzt. Eine lose Titano-Alumo-Phosphat-Schüttung oder im Festbett eingebrachtes Titano-Alumo-Phosphat eignet sich besonders, da es leicht in den Adsorptionsbehälter eingebracht werden kann.

Weiter ist von Vorteil, wenn das Titano-Alumo-Phosphat in der erfindungsgemäßen Trocknungsvorrichtung als loses Granulat in Form von Kügelchen, Zylindern, Perlen, Fäden, Stränge, Plättchen, Würfel, oder Agglomeraten vorliegt, da so die adsorptionsfähige Oberfläche des Titano-Alumo-Phosphats erhöht ist, was eine besonders effiziente Aufnahme von Feuchtigkeit ermöglicht.

Das Titano-Alumo-Phosphat kann in der erfindungsgemäßen Trocknungsvorrichtung als binderhaltiges oder binderfreies Granulat eingesetzt werden, wodurch sich der Einbau in die Trocknungsvorrichtung und das Einbringen in den Adsorptionsbehälter vereinfacht.

Vorteilhafterweise kann das Titano-Alumo-Phosphat auch in einer Beschichtung auf einem Formkörper vorliegen. Der Formkörper kann dabei jede beliebige geometrische Form annehmen, wie z.B. Hohlkörper, Platten, Netze oder Waben. Die Aufbringung erfolgt üblicherweise als Suspension (Washcoat) oder kann mit jedem weiteren dem Fachmann an sich bekannten Verfahren erfolgen.

Die Verwendung als Formkörper ist von Vorteil, da so das Adsorptionsmittel im Adsorptionsbehälter in der Adsorptionsvorrichtung platzsparend in die erfindungsgemäße Trocknungsvorrichtung integriert werden kann.

Die erfindungsgemäße Trocknungsvorrichtung weist einen Aufnahmeraum zur Aufnahme von zu trocknenden Gegenständen und Geräten auf, die von Restfeuchte befreit werden sollen.

Der eine Aufnahmeraum der erfindungsgemäßen Trocknungsvorrichtung umfasst zwei miteinander verbundene Aufnahmeräume, von denen einer eine Adsorptionsvorrichtung umfasst, enthaltend einen Adsorptionsbehälter, enthaltend ein Titano-Alumo-Phosphat als Adsorptionsmittel. Die Restfeuchte der zu trocknenden Gegenstände und Geräte wird zu den verbundenen weiteren Aufnahmeräumen mittels eines Luftstroms transportiert und vom Adsorptionsmittel adsorbiert.

In einer besonderen Ausführungsform der Erfindung kann die Trocknungsvorrichtung einen Aufnahmeraum enthalten, durch den die Gegenstände und Geräte mit Restfeuchte zur Trocknung transportiert werden können. Dabei wird erfindungsgemäß das Wasser aus der feuchten Luft durch das Adsorptionsmittel aufgenommen, während die getrocknete sowie durch die Adsorptionswärme erwärmte Luft wieder zurück in den Aufnahmeraum geführt wird, um dort erneut Feuchtigkeit aufzunehmen. Durch diese Trocknungsvorrichtung kann besonders schnell und effizient die Trocknung der Gegenstände und Geräte mit Restfeuchte erfolgen.

Weiter kann die Trocknungsvorrichtung einen weiteren damit verbundenen Aufnahmeraum für Gegenstände und Geräte mit Restfeuchte enthalten. Durch eine gleichzeitige Nutzung von Zuluft und Abluft kann eine kontinuierliche Trocknung und Beladung der Trocknungsvorrichtung erfolgen. Während im ersten Aufnahmeraum durch einen Luftstrom feuchte Luft zum Adsorptionsmittel geführt wird, kann der weitere Aufnahmeraum beladen werden. Die trockene, vorgewärmte Luft wird zum weiteren Aufnahmeraum geführt, und nimmt dort erneut Feuchtigkeit auf, während der erste Aufnahmeraum entladen und beladen werden kann. Eine derartige Trocknungsvorrichtung ist insbesondere für die Gastronomie von Bedeutung, da hier schnellstmöglich größte Mengen an Geschirr und Besteck getrocknet werden müssen. Um weitere Arbeitsschritte unnötig zu machen, muss die Trocknung gleichmäßig, ohne Wasserflecken o.ä. zu hinterlassen, erfolgen.

Die erfindungsgemäße Trocknungsvorrichtung enthält weiter eine Heizvorrichtung. Diese dient dazu, dass zur schnelleren Trocknung die Gegenstände und Geräte, die von Restfeuchte zu befreien sind, schneller getrocknet werden können. Die Heizvorrichtung kann zum Aufwärmen der Gegenstände und Geräte eingesetzt werden, und ist vorzugsweise ein Wärmestrahler, ein Heißluftgebläse, ein Infrarotstrahler oder ein Mikrowellenstrahler.

Dabei kann die Heizvorrichtung auch zeitgesteuert eingesetzt werden, z.B. erst nach einer vorbestimmten Zeit nach Trocknungsbeginn. Weiter kann die Heizvorrichtung so eingestellt werden, dass sie eine fortwährend gleichbleibende Temperatur gewährleistet, unter Vermeidung von Überhitzung der zu trocknenden Gegenstände und Geräte.

Die Leistung der Heizvorrichtung ist dabei so eingestellt, dass erfindungsgemäß die Trocknung schneller abläuft und / oder gegebenenfalls die Regenerierung des Adsorptionsmittels damit durchgeführt werden kann.

Von Vorteil ist, wenn die erfindungsgemäße Trocknungsvorrichtung eine Vorrichtung zur Erzeugung von Luftströmen aufweist. Diese Vorrichtung kann ein Gebläse, eine Luftpumpe, ein Kompressor oder ein Verdichter sein, und dient dazu, die feuchte Luft aus dem Aufnahmeraum zu den verbundenen weiteren Aufnahmeräumen zu transportieren und / oder aus der Trocknungsvorrichtung zu transportieren oder zurück in die Aufnahmeräume zu transportieren.

Erfindungsgemäß kann in den Aufnahmeräumen ein Überdruck herrschen. So wird die Feuchtigkeit durch den Luftstrom unter Überdruck zur Adsorptionsvorrichtung geführt, und dort vom Adsorptionsmittel adsorbiert. Gleichzeitig kann aufgrund der Wärme und des leichten Überdrucks des Luftstroms das wasserhaltige Adsorptionsmittel regeneriert werden.

Bevorzugt kann ein Heizgebläse eingesetzt werden, das sowohl die Funktion des Heizens, als auch des Erzeugens eines Luftstroms erfüllt.

Erfindungsgemäß kann mit Hilfe des Gebläses oder einer Vakuumvorrichtung auch ein Unterdruck in der erfindungsgemäßen Trocknungsvorrichtung erzeugt werden. Mittels Unterdruck wird die feuchte Luft noch schneller aus dem Aufnahmeraum entfernt, wodurch das Trocknungsverfahren noch effizienter wird.

Desweiteren kann die in der Trocknungsvorrichtung enthaltene Heizvorrichtung dazu genutzt werden, die Gegenstände und Geräte zur erleichterten Trocknung vorzuwärmen, als auch das wasserhaltige Adsorptionsmittel unter Desorption zu regenerieren. Dies kann während des Betriebes unter Abführen des wasserhaltigen Luftstroms aus der Adsorptionsvorrichtung erfolgen, oder nach einem Trocknungsvorgang.

Weiter kann die Regeneration des Adsorptionsmittels direkt vor einem Trocknungsvorgang erfolgen, da so die aufgewendete Restwärme der Regeneration zum vorwärmen der Gegenstände und Geräte mit Restfeuchte genutzt werden kann, was eine erleichterte Trocknung ermöglicht.

Weiter kann die Regeneration des Adsorptionsmittels bereits vor einem Spülvorgang erfolgen, da so die aufgewendete Energie, die zur Erwärmung des Spülwassers nötig ist, gleichzeitig zur Regeneration des Adsorptionsmittels genutzt werden kann.

Die erfindungsgemäße Trocknungsvorrichtung kann zur Entfernung von Restfeuchte aus Gegenständen und Geräten auch nach einer Reinigung der Gegenstände und Geräte eingesetzt werden.

In einer bevorzugten Ausführungsform kann die erfindungsgemäße Trocknungsvorrichtung eine Geschirrspülmaschine oder ein Wäschetrockner sein, die zur Trocknung und / oder Reinigung von Geschirrgut oder Textilien eingesetzt werden kann.

Die Aufgabe der vorliegenden Erfindung wird weiter gelöst durch ein Verfahren zur Trocknung von Gegenständen und Geräten mit Restfeuchte unter Verwendung einer Trocknungsvorrichtung umfassend die Schritte des
a) Bereitstellens von zu trocknenden Gegenständen und Geräten mit Restfeuchte,
b) Adsorbierens von Restfeuchte durch das Titano-Alumo-Phosphat in der Adsorptionsvorrichtung, unter Erhalt von wasserhaltigem Titano-Alumo-Phosphat,
c) Erhaltens von getrockneten Gegenständen.

Gemäß dem erfindungsgemäßen Verfahren werden von Restfeuchte zu befreiende Gegenstände und Geräte in einem Aufnahmeraum bereitgestellt.

Das erfindungsgemäße Verfahren beinhaltet einen weiteren Schritt des Adsorbierens von Restfeuchte durch das Titano-Alumo-Phosphat, unter Erhalt von wasserhaltigem Titano-Alumo-Phosphat.

Erfindungsgemäß kann ein Luftstrom die an den Gegenständen und Geräten anhaftende Restfeuchte aufwirbeln, wodurch diese leichter durch das Titano-Alumo-Phosphat adsorbiert werden kann. Dies beschleunigt den Trocknungsvorgang der Gegenstände und Geräte, da das Titano-Alumo-Phosphat pro Zeiteinheit mehr Wasser adsorbieren kann.

Die Gegenstände und Geräte mit Restfeuchte können, falls nötig, durch einen warmen Luftstrom erwärmt werden. Weiter wird durch den warmen Luftstrom die an den Gegenständen und Geräten anhaftende Restfeuchte aus dem Aufnahmeraum zur Adsorptionsvorrichtung geführt, in der das bereitgestellte Titano-Alumo-Phosphat die Restfeuchte unter Erhalt von wasserhaltigem Titano-Alumo-Phosphat adsorbiert.

Weiter kann erfindungsgemäß die Trocknung der Gegenstände und Geräte mit Restfeuchte unter erneutem Einsetzen der getrockneten Luft erfolgen. Die warme, trockene Luft nimmt im Aufnahmeraum Feuchtigkeit auf, wird zur Adsorptionsvorrichtung geführt, in der die Feuchtigkeit vom Adsorptionsmittel aufgenommen wird. Durch die Adsorption der Feuchtigkeit wird nun Adsorptionswärme frei, die die getrocknete Luft nun aufwärmt. Diese trockene, vorgewärmte Luft wird erneut in den Aufnahmeraum geleitet, in der sie wieder Feuchtigkeit aufnehmen kann. So kann die Trocknung der Gegenstände und Geräte noch effizienter gestaltet werden.

Im erfindungsgemäßen Verfahren beträgt die vom Titano-Alumo-Phosphat reversibel adsorbierte Restfeuchte zwischen 5 % bis 30 % der an den zu trocknenden Gegenständen anhaftenden Restfeuchte. Durch die Adsorption der Restfeuchte durch das Titano-Alumo-Phosphat wird die Trocknung der Gegenstände und Geräte schneller, effizienter, schonender und gleichmäßiger.

Im erfindungsgemäßen Verfahren wird das Titano-Alumo-Phosphat in einer Gewichtsmenge von 0,1 bis 10 kg bevorzugt von 0,3 bis 5 kg und am meisten bevorzugt von 0,5 bis 2,5 kg eingesetzt. Dies ist abhängig von der zu trocknenden Menge an Gegenständen und Geräten. Die Menge des Adsorptionsmittels wird entsprechend der Anzahl der Trocknungsvorgänge, der Menge der zu trocknenden Gegenstände und Geräte, sowie vor allem an die Größe der Trocknungsvorrichtung angepasst.

Dabei kann erfindungsgemäß auch eine große Menge an Titano-Alumo-Phosphat eingesetzt werden, bevorzugt in einer Gewichtsmenge von 10 bis 100 kg, wenn das Adsorptionsmittel nicht nach jedem einzelnen Trocknungsvorgang regeneriert werden muss, sondern ohne Regeneration die Feuchtigkeit z.B. auch in großen Mengen zuverlässig adsorbiert.

Erfindungsgemäß kann das Adsorptionsmittel in einer Menge eingesetzt werden, die der Menge des zu absorbierenden Wassers entspricht. Weiter kann auch ein Vielfaches davon eingesetzt werden. Hierfür kann das Einfache bis Fünfzigfache der Menge des zu absorbierendem Wassers eingesetzt werden. Somit können 1 l zu entfernendem Wassers einer Menge von 1 kg bis 50 kg des Adsorptionsmittels entsprechen, bevorzugt pro 1 l Wasser 1 kg bis 20 kg Adsorptionsmittel.

Erfindungsgemäß werden Titano-Alumo-Phosphate ausgehend von einer Silizium-Quelle, Aluminium-Quelle und Phosphor-Quelle, unter Umsetzen zu einem Gel, Zugebens von TiO₂ zu dem Gel unter Erhalt einer Gelzusammensetzung, und Umsetzens der Gelzusammensetzung unter Erhalt von Titano-Alumo-Phosphaten hergestellt.

### Beispiel 1

100,15 Gewichtsteile entionisiertes Wasser und 88,6 Gewichtsteile Hydrargillit (Aluminiumhydroxid SH10, von Aluminium Oxid Stade GmbH, Deutschland erhältlich) wurden gemischt. Dem erhaltenen Gemisch wurden 132,03 Gewichtsteile Phosphorsäure (85%ig) und 240,9 Gewichtsteile TEAOH (Tetraethylammoniumhydroxid) (35 % in Wasser) und dann 33,5 Gewichtsteile Silicasol (Köstrosol 1030,30 % Siliziumdioxid, erhältlich von CWK Chemiewerk Bad Köstriz, Deutschland) und 4,87 Gewichtsteile Siliziumdotiertes Titandioxid (TiO₂ 545 S, Evonik, Deutschland) zugesetzt, so dass ein Synthesegelgemisch mit der folgenden molaren Zusammensetzung erhalten wurde:
Es wurde ein Synthesegelgemisch mit der folgenden molaren Zusammensetzung erhalten:
   Al₂O₃:P₂O₅:0,3 SiO₂:0,1 TiO₂:1 TEAOH: 35 H₂O

Das Synthesegelgemisch mit der vorstehenden Zusammensetzung wurde in einen Edelstahlautoklaven überführt. Der Autoklav wurde gerührt und auf 180 °C aufgeheizt, wobei diese Temperatur 68 Stunden gehalten wurde. Nach dem Abkühlen wurde das erhaltene Produkt abfiltriert, mit entionisiertem Wasser gewaschen und im Ofen bei 100 °C getrocknet. Ein Röntgendiffraktogramm des erhaltenen Produkts zeigte, dass es sich bei dem Produkt um reinen TAPSO-34 handelte. Die Elementaranalyse ergab eine Zusammensetzung von 1,5 % Ti, 2,8 % Si, 18,4 % Al und 17,5 % P, was einer Stöchiometrie von Ti_{0,023}Si_{0,073}Al_{0,494}P_{0,410} entspricht. Gemäß einer SEM (Rasterelektronenmikroskop)-Analyse des Produkts lag dessen Kristallgröße im Bereich von 0,5 bis 2 µm.

Zur Veranschaulichung der vorliegenden Erfindung und ihrer Vorteile wird diese anhand der folgenden Beispiele beschrieben, ohne dass diese als einschränkend verstanden werden sollen.

Es zeigen:
Figur 1: die Wasser-Adsorptionsrate und Wasser-Desorptionsrate eines Titano-Alumo-Phosphats, als Funktion von Temperatur und absorbiertem Volumen an Wasser in Gewichtsprozent [Gew.-%], bei 4,1 mBar und bei 11,6 mBar Wasserdampfdruck.
Figur 2: die Wasser-Adsorptionsrate und Wasser-Desorptionsrate des Zeolithen 13 X, des Standes der Technik, als Funktion von Temperatur und absorbiertem Volumen an Wasser in Gewichtsprozent [Gew.-%], bei 4,1 mBar und bei 11,6 mBar Wasserdampfdruck.

### Methodenteil:

Nachfolgend sind verwendete Methoden und Geräte aufgeführt, die jedoch nicht als einschränkend verstanden werden sollen.

### Druckkammer-Versuch:

Zur Untersuchung des Adsorptions- und Desorptionsvermögens des Titano-Alumo-Phosphats wurde eine Druckkammer des Typs "IGA003" der Firma Hiden Analytical verwendet.

Der nötige Wasserdampf wurde *in situ* aus einem Flüssigreservoir erzeugt. Die Messung erfolgte statisch im Vakuum. Vor der Messung wurde Vakuumdichtheit und Hochvakuum eingestellt (<10⁻⁵ mBar, extern am Hochvakuumanschluss mit einem Gerät Pfeiffer des Typs "IKR 261").

Der Wasserdampfdruck wurde Geräteintern mittels zweier Drucksensoren des Typs "Baratron" der Firma MKS kontrolliert.

Die Temperatur in der Kammer wurde mit Thermostaten des Typs RTE-111 der Firma Neslab eingestellt.

Für das Ausführungsbeispiel wurde TAPSO-34 der Firma Süd-Chemie AG verwendet.

Für das Vergleichsbeispiel wurde Zeolith 13 X der Firma Süd-Chemie AG verwendet.

### Allgemeine Versuchsbeschreibung:

### Allgemeiner Versuch zur Desorption:

Die Regeneration des wasserhaltigen Titano-Alumo-Phosphats kann durch Wärmebehandlung bei geringen Temperaturen von 50 °C bis 100 °C erfolgen, wenn ein geringer Druck angelegt wird.

In einer Druckkammer mit einer relativen Luftfeuchte von 38 % bzw. 63 % und einem Wasserdampfpartialdruck von bis zu 20 mBar wurde das Desorptionsvermögen eines wasserhaltigen Titano-Alumo-Phosphats in Abhängigkeit vom Wasserdampfdruck getestet. Dafür wurde der Wasserdampfdruck in einer Druckkammer schrittweise von 29 mBar bis auf 10⁻³ mBar bei einer Temperatur von 25 °C eingestellt. Die adsorbierte Wassermenge im Adsorptions-Desorptionsgleichgewicht wurde gemessen. Es wurde die Wasseraufnahme an über 20 Druckpunkten nacheinander gemessen. Nach Einstellung des Wasserdampfdrucks wurde bis zu 60 min die Masseänderung auf Gleichgewichtseinstellung verfolgt.

Es zeigte sich, dass in Abhängigkeit vom angelegten Druck das Adsorptions-Desorptionsgleichgewicht verschoben werden kann. Bereits ein Wasserdampfdruck von 1 mBar reicht aus, damit die Desorption bevorzugt gegenüber der Adsorption abläuft. Eine Erhöhung des Wasserdampfdrucks auf 3 mBar (entspricht 9 % relativen Luftfeuchte bei Normaldruck) bewirkt eine Erhöhung der adsorbierten Wassermenge um über 20 Gew.-%. Das bedeutet, dass trotz hoher Feuchtigkeit das Adsorptions-Desorptionsgleichgewicht durch Erhöhung des Wasserdampfdrucks zur Desorption verschoben werden kann.

### Allgemeiner Teil der Versuchsbeschreibung:

In einer beheizbaren, mit Wasserdampf gefüllten Druckkammer wurde das Adsorptions- und Desorptionsverhalten eines Adsorptionsmittels in Abhängigkeit von der Temperatur untersucht.

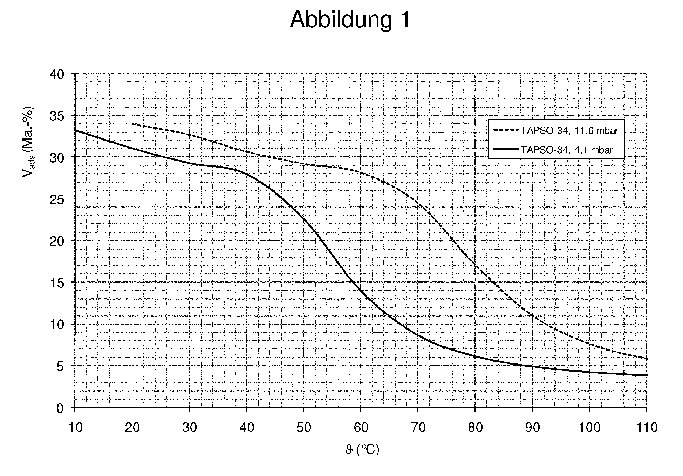

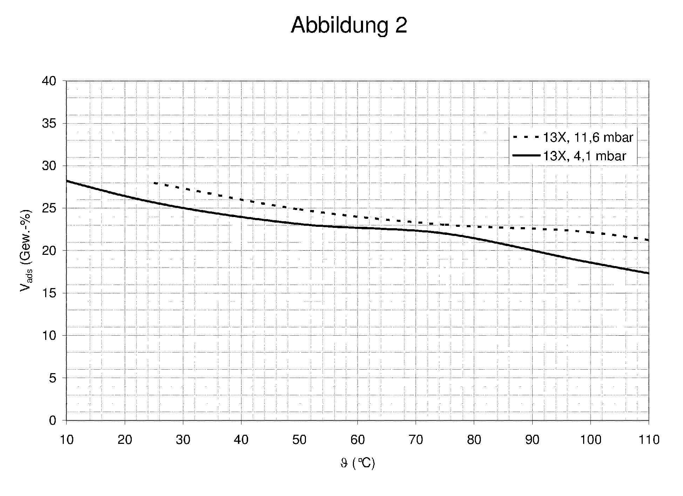

Dafür wurde der Wasserdampfdruck in einer Druckkammer auf 4,1 mBar (siehe Figur 1, bzw. Figur 2: durchgezogene Linie) sowie auf 11,6 mBar (siehe Figur 1, bzw. Figur 2: gestrichelte Linie) eingestellt.

Es erfolgte zuerst eine Testreihe bei verschiedenen Temperaturen bei einem konstanten Wasserdampfdruck von 4,1 mBar, anschließend eine weitere Testreihe bei verschiedenen Temperaturen bei einem konstanten Wasserdampfdruck von 11,6 mBar in der Druckkammer.

Die Testreihen wurden bei Temperaturen von 10 °C bis 110 °C durchgeführt, jeweils bei 4,1 mBar sowie bei 11,6 mBar. Die Temperatur wurde in der Druckkammer mit einem Thermostaten eingestellt, und erst nach konstantem Halten der Temperatur von 10 min wurde eine entsprechende Menge an Adsorptionsmittel in die Druckkammer über ein entsprechendes Ventil zugegeben.

### Ausführungsbeispiel

Im Ausführungsbeispiel wurde TAPSO-34 eingesetzt.

Die Testreihen bei 4,1 mBar Wasserdampfdruck zeigen für geringe Temperaturen von 10 °C bis 40 °C, dass viel Wasser adsorbiert wird. Die Werte des adsorbierten Wassers liegen hier in einem Bereich von 30 Gew.-% bis ca. 35 Gew.-% (siehe Figur 1).

Wird die Temperatur erhöht, so sinkt in dem Temperaturbereich von 40 °C bis 70 °C die Adsorptionsrate an adsorbiertem Wasser von 30 Gew.-% auf ca. 5 Gew.-% (Figur 1).

Im Temperaturbereich von 80 °C bis 110 °C sinkt die Adsorptionsrate an adsorbiertem Wasser dagegen kaum. In diesem Temperaturbereich bleibt die Adsorptionsrate relativ konstant, bei etwa unter 5 Gew.-% an adsorbiertem Wasser (Figur 1).

Bei höherem Wasserdampfdruck von 11,6 mBar (Figur 1, gestrichelte Linie) verzögert sich das Sinken der Adsorptionsrate. Im Temperaturbereich von 20 °C bis 60 °C bleibt die Adsorptionsrate des adsorbierten Wassers bei 35 Gew.-% bis 30 Gew.-% relativ konstant.

Bei einer Temperaturerhöhung auf 70 °C beginnt die Adsorptionsfähigkeit des SAPO-34 zu sinken. Eine verstärkte Abnahme der Adsorptionsrate beginnt bei einer Temperatur von 70 °C bis 90 °C (25 Gew.-% bis 5 Gew.-% an adsorbiertem Wasser) .

Bei Temperaturen von über 90 °C liegen die geringsten Adsorptionsraten des SAPO-34, hier nähert sich die Adsorptionsrate etwa 5 Gew.-% an.

Anhand Figur 1 wird deutlich, dass TAPSO-34 bei höheren Temperaturen weniger Wasser adsorbiert und die Adsorptionsrate sinkt. Adsorption und Desorption stehen miteinander in Konkurrenz. Das Gleichgewicht verschiebt sich bei höheren Temperaturen hin zur Desorption.

In Abhängigkeit vom Druck findet somit bei 4,1 mBar bereits bei über 40 °C eine verstärkte Desorption statt. Was bedeutet, dass bereits geringe Temperaturen ausreichen, um das adsorbierte Wasser aus SAPO-34 reversibel zu entfernen.

### Vergleichsbeispiel

Im Vergleichsbeispiel wurde eine entsprechende Menge von Zeolith 13 X eingesetzt. Der Zeolith 13 X gehört zur FAU-Strukturklasse, zur Gruppe des Zeolith X, die insbesondere auch die Gruppe der Faujasite enthält. Zeolith 13 X weist eine Porengröße von 13 Å auf, und wird als Molekularsieb zur Adsorption von Wasser und Wasserdampf eingesetzt.

Das Vergleichsbeispiel des Zeolith 13 X zeigt (Figur 2), dass die Adsorptionsrate nur wenig von der Temperatur beeinflusst wird. Hier findet keine Verschiebung des Adsorptions-Desorptions-Gleichgewichts innerhalb des untersuchten Temperaturbereichs von 10 °C bis 150 °C statt.

Figur 2 zeigt, dass der Wasserdampfdruck nur sehr wenig Einfluss auf das Adsorptionsverhalten des Zeolith 13 X hat.

Das langsame Sinken der Adsorptionsrate zeigt, dass für eine Umkehr des Adsorptions-Desorptions-Gleichgewichts eine viel höhere Temperatur (>> 150 °C) nötig ist. Dies bedeutet, dass um wasserhaltigen Zeolith 13 X zu regenerieren eine vielfach höhere Temperatur nötig ist, als im Test untersucht wurde.

## Patentansprüche

1. Trocknungsvorrichtung mit Wärmemanagement, umfassend einen Adsorptionsbehälter mit einem Titano-Alumo-Phosphat als Adsorptionsmittel.

2. Trocknungsvorrichtung nach Anspruch 1, **dadurch gekennzeichnet, dass** das Titano-Alumo-Phosphat ein regenerierbares Silico-Titano-Alumo-Phosphat (TAPSO) ist.

3. Trocknungsvorrichtung nach Anspruch 2, **dadurch gekennzeichnet, dass** das Silico-Titano-Alumo-Phosphat ein mikroporöses Silico-Titano-Alumo-Phosphat (TAPSO) des Typs TAPSO-5, TAPSO-8, TAPSO-11, TAPSO-16, TAPSO-17, TAPSO-18, TAPSO-20, TAPSO-31, TAPSO-34, TAPSO-35, TAPSO-36, TAPSO-37, TAPSO-40, TAPSO-41, TAPSO-42, TAPSO-44, TAPSO-47, TAPSO-56 ist.

4. Trocknungsvorrichtung nach Anspruch 2 oder 3, **dadurch gekennzeichnet, dass** das Silico-Titano-Alumo-Phosphat (TAPSO) mindestens ein weiteres Metall ausgewählt aus Silizium, Eisen, Mangan, Kobalt, Kupfer, Chrom, Zink und Nickel enthält.

5. Trocknungsvorrichtung nach Anspruch 1, **dadurch gekennzeichnet, dass** das Titano-Alumo-Phosphat weiter mindestens ein Metall oder Halbmetall ausgewählt aus der Gruppe bestehend aus Silizium, Titan, Eisen, Mangan, Kupfer, Chrom, Zink, Kobalt und Nickel enthält.

6. Trocknungsvorrichtung nach einem der vorhergehenden Ansprüche 1 bis 5, in der das Titano-Alumo-Phosphat als Festbett oder lose Materialschüttung vorliegt.

7. Trocknungsvorrichtung nach Anspruch 6, **dadurch gekennzeichnet, dass** das Titano-Alumo-Phosphat als loses binderhaltiges oder binderfreies Granulat vorliegt.

8. Trocknungsvorrichtung nach einem der Ansprüche 1 bis 5, in der das Titano-Alumo-Phosphat in einer Beschichtung auf einem Formkörper vorliegt.

9. Trocknungsvorrichtung nach Anspruch 7 oder 8, **dadurch gekennzeichnet, dass** mindestens ein Aufnahmeraum für zu trocknende Gegenstände und Geräte enthalten ist.

10. Trocknungsvorrichtung nach Anspruch 9, **dadurch gekennzeichnet, dass** der mindestens eine Aufnahmeraum mindestens zwei miteinander verbundene Aufnahmeräume umfasst, von denen mindestens einer einen Adsorptionsbehälter umfasst.

11. Trocknungsvorrichtung nach einem der vorstehenden Ansprüche 1 bis 10 mit einer Heizvorrichtung.

12. Trocknungsvorrichtung nach einem der vorstehenden Ansprüche 1 bis 11, weiter umfassend ein Gebläse zur Erzeugung einer Luftströmung.

13. Trocknungsvorrichtung, nach einem der vorstehenden Ansprüche 1 bis 12, **dadurch gekennzeichnet, dass** im Aufnahmeraum Überdruck oder Unterdruck herrscht.

14. Trocknungsvorrichtung, nach einem der Ansprüche 1 bis 13, die eine Geschirrspülmaschine oder ein Wäschetrockner ist.

15. Verfahren zur Trocknung von Gegenständen und Geräten mit Restfeuchte unter Verwendung einer Trocknungsvorrichtung nach einem der vorstehenden Ansprüche 1 bis 14, umfassend die Schritte des
a) Bereitstellens von zu trocknenden Gegenständen mit Restfeuchte,
b) Adsorbierens von Restfeuchte durch das Titano-Alumo-Phosphat in der Adsorptionsvorrichtung, unter Erhalt von wasserhaltigem Titano-Alumo-Phosphat,
c) Erhaltens von getrockneten Gegenständen.

16. Verfahren nach Anspruch 15, **dadurch gekennzeichnet, dass** das Titano-Alumo-Phosphat zwischen 5 % bis 30 % der anhaftenden Restfeuchte reversibel adsorbiert.

17. Verfahren nach Anspruch 16, **dadurch gekennzeichnet, dass** das Titano-Alumo-Phosphat in einer Gewichtsmenge von 0,1 kg bis 10 kg eingesetzt wird.

18. Verfahren nach Anspruch 17, **dadurch gekennzeichnet, dass** das Regenerieren des Titano-Alumo-Phosphats unter Nutzung der Restwärme in der Trocknungsvorrichtung erfolgt, umfassend die Schritte des
a) Regenerierens des wasserhaltigen Titano-Alumo-Phosphats durch eine Wärmebehandlung,
b) Erhaltens von regeneriertem Titano-Alumo-Phosphat in der Adsorptionsvorrichtung und wasserhaltiger Luft,
c) Abtransportierens der wasserhaltigen Luft mittels Luftströmung.

19. Verfahren nach Anspruch 18, **dadurch gekennzeichnet, dass** die Wärmebehandlung bei 50 °C bis 100 °C durchgeführt wird.

20. Verfahren zur Herstellung von Titano-Alumo-Phosphaten umfassend die Schritte
a) Bereitstellens einer Silizium-Quelle, Aluminium-Quelle und Phosphor-Quelle,
b) Umsetzens der Silizium-, Aluminium- und Phosphor-Quelle zu einem Gel,
c) Zugebens von TiO₂ zu dem Gel unter Erhalt einer Gelzusammensetzung,
d) Umsetzens der Gelzusammensetzung unter Erhalt von Titano-Alumo-Phosphaten.
